# EUROPEAN PATENT APPLICATION

(11) **EP 1 083 762 A1**
(43) Date of publication of application: **14.03.2001**
(21) Application number: 99402220.0
(22) Date of filing: 09.09.1999
(51) Int. Cl.: H04Q 7/30

(54) **Mobile telecommunication terminal with a codec and additional decoders**

(71) Applicant: ALCATEL, 75008 Paris (FR)
(72) Inventor: Bernard, Gregory Georges Denis Ghislain, 2800 Mechelen (BE); Peters, Marco Johannes Hubertus, 4617 NS Bergen op Zoom (NL)
(74) Representative: Narmon, Gisèle Marie Thérèse

(57) **Abstract**

A mobile telecommunication terminal or handset (TA) including a codec (CA) comprising an encoder (EA) and a decoder (DA) operating according to a first predefined code type (code A). The handset further includes a second decoder (DB') operating according to a second predefined code type (code B), but without including a corresponding encoder. Memory resources are thereby saved. In a preferred embodiment, the second decoder is temporarily stored in a memory of the handset and may be downloaded, e.g. from the Internet, via a mobile network (MNA). Different types of decoders may so be stored in the handset, and may even be upgraded in order to optimize the quality of the reception.

## Description

The present invention relates to a mobile telecommunication terminal coupled to a mobile network, said terminal including encoder means adapted to encode output data into data transmitted according to a predefined code type used by said mobile network, said terminal further including decoder means adapted to decode data received according to said predefined code type into input data for said terminal.

Such a mobile telecommunication terminal is generally known in the art and the mobile network is for instance a well known Global System for Mobile communication [GSM] network or an Universal Mobile Telephone Standard [UMTS] network. The known mobile terminal or handset includes at least one "codec" that performs encoding and decoding operations by the respective encoder means and decoder means included therein. The codec is coupled to one or more interfaces included in the terminal and to which input means such as a microphone, a keyboard, a sensitive screen and/or a video camera are connected. The encoding operation consists in transforming output data of any interface of the terminal into coded data used by the mobile network for radio transmission between the mobile terminal and a Base Station Sub-system [BSS]. The decoding operation for input data is reciprocal to the encoding operation for output data. The coded data is represented according to a mobile network code type as for instance the Full Rate [FR] code type (Version 1, 2 or 3), the Half Rate [HR] code type (Version 1 or 3) as for instance both described in the draft ETSI standard ETSI EN 300 940 V7.1.2 (1999-08), the Enhanced Full Rate [EFR] code type, or any other code type for GSM and/or UMTS networks such as the Adaptive Multi Rate [AMR] that comprises several types of code. This amount of different code types is subjected to a future grow.

It appears that, in order to be able to communicate with most any other mobile telecommunication terminal, a terminal needs to be provided with several, or better with all, the actual and future codecs. However, codecs require many memory resources. This will result in the fact that generally only a limited number of codecs is installed in a mobile terminal or handset.

On the other hand, when two mobile terminals communicate by means of a same code type, transcoding operations may be simplified. Indeed, each terminal is coupled to its own mobile network and these networks are interconnected by a core network constituted by packet switched network(s) and/or circuit switched network(s). A first transcoding operation is performed when the coded data of a first mobile terminal enters the core network. The data is then transformed by a first transcoder of a Base Station Sub-system [BSS] from data encoded according to a first predefined GSM/UMTS code type into data encoded according, e.g., to a Pulse Code Modulation [PCM] code type. A second transcoding operation is performed by a second transcoder of a BSS of a second mobile network to which the second mobile terminal is associated. Furthermore, during propagation through the switched network(s), additional transcoding operations are eventually performed. Each transcoding operation consisting in decoding the data at an incoming format and encoding the data into another format introduces delay and quality losses. The minimum of two transcoding operations can be avoided if the two mobile terminals use the same code type, i.e. are provided with the same codecs. In that case, the transcoding to and from the PCM code type can be suppressed. The so-called Transcoding Free Operation [TFO] then performed is described in two standards of European Telecommunication Standards Institute [ETSI] with reference GSM 02.53 V7.0.0 (1998-04): "Digital Cellular Telecommunication System (Phase 2+) / Tandem Free Operation / Service Description Stage 1", and GSM 03.53 V7.0.0 (1998-05): "Digital Cellular Telecommunication System (Phase 2+) / Tandem free Operation / Service Description Stage 2".

As described in the standards, in the case when the first predefined code type and the second predefined code type are identical and the first and second transcoders enable to establish a transcoding free operation [TFO], both transcoders eliminate its transcoding operation. Hereby the data undergoes only an encoding from output data, e.g. voice, to the predefined code type in the first mobile terminal and a decoding from this predefined code type to voice in the second mobile terminal. In more detail, it is described in the above-mentioned standards that the inter-operation between both TFO enabled transcoders is executed by means of in-band signaling. This means that one or more predefined bits are stolen from the ordinary data transport format, e.g. one out of 16 bits in the PCM samples is stolen.

An object of the present invention is to provide a mobile telecommunication terminal adapted to communicate with any other mobile telecommunication terminal while requiring a relatively low amount of memory resources, and preferably by taking advantage of the transcoding free operation.

According to the invention, this object is achieved due to the fact that said mobile telecommunication terminal further includes second decoder means adapted to decode data received according to a second predefined code type into said input data, without including second encoder means adapted to encode said output data into data transmitted according to said second predefined code type, said second predefined code type being also used by said mobile network and being different from the first mentioned predefined code type.

In this way, instead of housing an additional codec adapted to operate according to a second predefined code type used by a second terminal, as it is usually the case, the terminal of the invention only houses the decoder of such a codec, not the encoder thereof. The two terminals are then however able to communicate each with its preferred code type. Moreover, it is then also possible to perform a transcoding free operation as mentioned above.

In a preferred embodiment, said mobile telecommunication terminal includes memory means adapted to store second decoder means, said second decoder means being adapted to decode data received according to a second predefined code type into said input data, said second decoder means being received via said mobile network, and said second predefined code type being different from the first mentioned predefined code type.

In this way, to communicate with any second terminal, only the decoder corresponding to a second predefined code type used by this second terminal is loaded in the memory means of the terminal of the invention.

Another characteristic feature of the present invention is that said second decoder means are temporarily stored into said memory means.

When the communication with the second terminal using the second predefined code type is completed, the memory means may be freed in order to receive another decoder means.

The present terminal is further adapted to overwrite said second decoder means by another decoder means into said memory means, the other decoder means being adapted to decode data received according to another predefined code type into said input data, and the other predefined code type being different from the first and the second predefined code types.

Further characteristic features of the present mobile telecommunication terminal are mentioned in the appended claims.

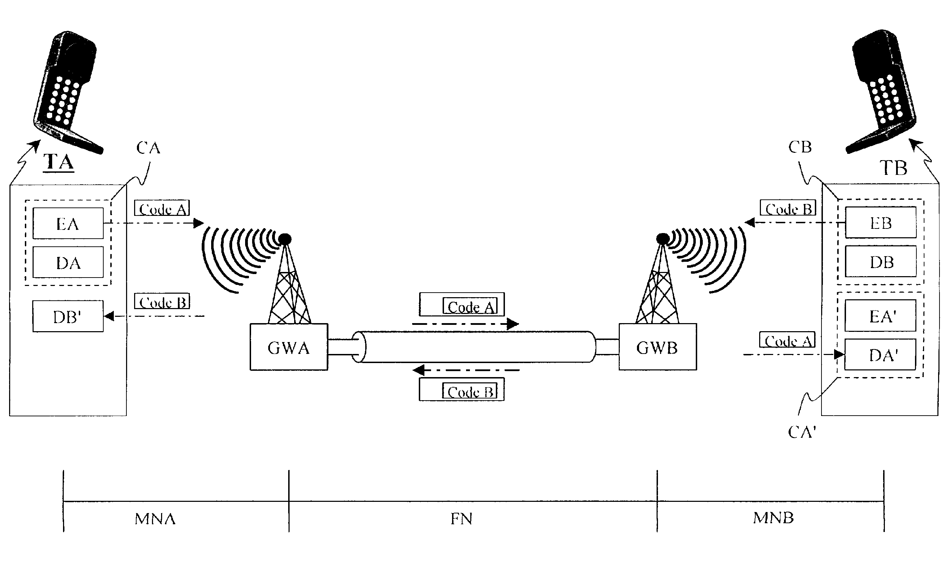

The above and other objects and features of the invention will become more apparent and the invention itself will be best understood by referring to the following description of an embodiment taken in conjunction with the accompanying drawing wherein the figure represents a mobile telecommunication terminal TA according to the invention and used in a telecommunication network.

At the left side of the figure, a mobile telecommunication terminal TA is associated to a mobile network MNA that is coupled to a fixed network FN via a network interface GWA. At the other end of the fixed network FN, shown at the right side of the figure, a second network interface GWB couples the fixed network FN to a second mobile network MNB to which a second mobile telecommunication terminal TB is associated.

The mobile terminal or handset TA comprises one or more interfaces (not shown) to which are connected input means such as a microphone, a keyboard, a sensitive screen and/or a video camera. TA further comprises an encoder EA adapted to transform output data of any of these interfaces into coded data used for radio transmission between the handset TA and the network interface GWA over the mobile network MNA. The handset TA also comprises a decoder DA adapted to transform coded data into input data for the interface(s). The encoder EA and decoder DA together form a codec CA. The mobile terminal or handset TB is similar to TA and includes a codec CB constituted by an encoder EB and a decoder DB. As the codec CA, the codec CB is adapted to transform interface data into coded data used over the second mobile network NMB, and vice versa.

The network interfaces GWA and GWB each comprises a transcoder able to transform the coded data used in the mobile networks MNA and MNB into other coded data used by the fixed network FN. The mobile networks MNA and MNB may be of the type GSM or UMTS wherein the data is coded according to code types such as Full Rate (Version 1, 2 or 3) [FR], Half Rate (Version 1 or 3) [HR], Enhanced Full Rate [EFR] or Adaptive Multi Rate [AMR] that is a set of several code types. The code type, say "code A", used by the codec CA of the handset TA is one of these code types and may for instance be different of the code type, say "code B", used by the codec CB of the handset TB.

In more detail, the network interfaces GWA and GWB each includes a Base Station Sub-system [BSS] (not shown) comprising a Base Transceiver Station [BTS] and a Base Station Controller [BSC]. The base transceiver station is provided with an antenna coupled, via the base station controller, to a Mobile Services Switching Center [MSC] itself connected to a GateWay [GW]. The transcoder is physically located in the BSS.

The fixed network FN is a core network of the type packet switched network or circuit switched network or any combination of such networks. In the fixed network FN, the data is for instance coded according to a 64 kbps PCM transmission code. The network interfaces GWA and GWB are able to perform conversions between the above codes A/B and the PCM transmission code in both directions.

However, any conversion by a transcoder introduces delay and quality losses of the communication. In order to reduce these drawbacks, the transcoders of the network interfaces GWA and GWB preferably enable a Transcoding Free Operation [TFO]. A transcoding free operation requires that each handset has to use the same code type, e.g. code A. As a consequence, in the present example, the classical handset TB needs to have, in addition to its codec CB, a codec CA' adapted to operate according to the code A. This codec CA' comprises an encoder EA' and a decoder DA'. In this case, the transcoding to and from the PCM code type may be suppressed. However, an additional codec, such as CA' in the handset TB, requires many memory resources from this handset TB. This is the reason why the handsets are not provided with all the possible codecs. To avoid this problem, the mobile terminal of the present invention, say TA, is provided as already mentioned with a codec CA including an encoder EA and a decoder DA operating with the code type A, and with a decoder DB' operating with the code B, i.e. the code type of the codec CB. In order to save memory resources, the handset TA has however no encoder operating with the code type B.

It is to be noted that, although shown with a single additional decoder DB', the handset TA may be provided with several additional decoders similar to DB', without having corresponding encoders.

The communication is set-up as follows. The encoder EA of the codec CA of the handset TA encodes the outgoing interface's data, e.g. voice, into data coded according to the predefined code type A. This coded data, hereafter referred to as code A and indicated by a like-named arrow in the figure, is transmitted via the mobile network MNA to the network interface GWA. In case of an enabled Transcoding Free Operation [TFO], the code A is encapsulated in a container transmitted through the fixed network FN from the network interface GWA to the network interface GWB. At the network interface GWB, the code A is decapsulated from the container and transmitted to the handset TB via the mobile network MNB. The decoder DA' of the codec CA' of the handset TB then decodes the code A into incoming voice for TB.

In the other direction, the encoder EB of the codec CB of the handset TB encodes the outgoing voice into data coded according to the predefined code type B. This coded data, hereafter referred to as code B and indicated by a like-named arrow in the figure, is transmitted via the mobile network MNB to the network interface GWB. In this case of an enabled Transcoding Free Operation [TFO], the code B is encapsulated in a container transmitted through the fixed network FN from the network interface GWB to the network interface GWA. At the network interface GWA, the code B is decapsulated from the container and transmitted to the handset TA via the mobile network MNA. The decoder DB' of the handset TA then decodes the code B into incoming voice for the interface of TA.

In a preferred embodiment, the decoder DB' is not permanently stored in the memory of the handset TA. Different decoders, i.e. decoders operating with to different types of code, may then successively be stored in the memory according to the necessities.

The decoder DB' is a software that may be downloaded, e.g. from the Internet, via the mobile network MNA. This allows not only to adapt (even temporarily) the mobile terminal TA to the code type used by another terminal TB, but also to download in the memory of TA the latest version of a particular decoder. This has the advantage of optimizing the communication, or at least the reception part thereof, and is even applicable in case of transcoding free operation is not enabled. Moreover, the cost is also reduced since decoders are generally available to be downloaded for free, whilst the purchasing of encoders is relatively expensive.

While the principles of the invention have been described above in connection with specific apparatus, it is to be clearly understood that this description is made only by way of example and not as a limitation on the scope of the invention, as defined in the appended claims.

## Claims

1. Mobile telecommunication terminal (TA) coupled to a mobile network (MNA), said terminal including encoder means (EA) adapted to encode output data into data transmitted according to a predefined code type (code A) used by said mobile network,
said terminal further including decoder means (DA) adapted to decode data received according to said predefined code type into input data for said terminal,
characterized in that said mobile telecommunication terminal (TA) further includes second decoder means (DB') adapted to decode data received according to a second predefined code type (code B) into said input data, without including second encoder means adapted to encode said output data into data transmitted according to said second predefined code type, said second predefined code type (code B) being also used by said mobile network (MNA) and being different from the first mentioned predefined code type (code A).

2. Mobile telecommunication terminal (TA) coupled to a mobile network (MNA), said terminal including encoder means (EA) adapted to encode output data into data transmitted according to a predefined code type (code A) used by said mobile network,
said terminal further including decoder means (DA) adapted to decode data received according to said predefined code type into input data for said terminal,
characterized in that said mobile telecommunication terminal (TA) includes memory means adapted to store second decoder means (DB'),
said second decoder means being adapted to decode data received according to a second predefined code type (code B) into said input data,
said second decoder means being received via said mobile network (MNA), and
said second predefined code type being different from the first mentioned predefined code type (code A).

3. Mobile telecommunication terminal according to claim 2, characterized in that said second decoder means (DB') is temporarily stored into said memory means.

4. Mobile telecommunication terminal according to claim 3, characterized in that said terminal (TA) is adapted to overwrite said second decoder means (DB') by another decoder means into said memory means,
the other decoder means being adapted to decode data received according to another predefined code type into said input data, and
the other predefined code type being different from the first (code A) and the second (code B) predefined code types.

5. Mobile telecommunication terminal according to any of the preceding claims, characterized in that said second decoder means (DB') is software.
